# DEMANDE DE BREVET EUROPEEN

(11) **EP 1 020 336 A1**
(43) Date de publication de la demande: **19.07.2000**
(21) Numéro de dépôt: 00400048.5
(22) Date de dépôt: 11.01.2000
(51) Int. Cl.: B60R 25/02

(54) **Antivol de direction de véhicule automobile**

(30) Priorité: 15.01.1999 FR 9900401
(71) Demandeur: Valeo Securité Habitacle, 94042 Créteil (FR)
(72) Inventeur: Canard, Louis, 58000 Nevers (FR)
(74) Mandataire: Lenne, Laurence

(57) **Abrégé**

L'invention propose un antivol (10) comportant un corps (12, 14, 16) dans lequel est monté coulissant un pêne (50) associé à un doigt de blocage (110) reçu dans un logement de blocage (120) de l'organe de sortie (34) d'un verrou rotatif (18) et associé à une tirette (78) dont une patte (88) peut être retenue par un basculeur de retenue (92) en forme de crochet (106) pour libérer l'arbre de la colonne de direction (56) en vue de l'utilisation du véhicule.

## Description

La présente invention concerne un antivol de direction de véhicule automobile.

L'invention concerne plus particulièrement un antivol de direction de véhicule automobile du type comportant un boîtier dans lequel un verrou est monté à rotation entre une position angulaire de repos dans laquelle une clef conforme peut être introduite, d'arrière en avant, ou retirée axialement, et au moins une position angulaire d'utilisation, dans laquelle la clef ne peut être extraite du verrou, le verrou comportant un organe de sortie rotatif formant came qui est susceptible de coopérer avec un doigt de commande porté par un pêne pour commander les déplacements de ce dernier qui est monté coulissant dans le boîtier selon une direction axiale, entre une position avant d'antivol vers laquelle il est sollicité élastiquement et dans laquelle il fait saillie axialement vers l'avant à travers une ouverture du boîtier pour bloquer en rotation un organe de la colonne de direction lorsque le verrou est en position de repos, clef extraite, et une position arrière escamotée à l'intérieur du boîtier.

On connaît de nombreuses conceptions d'un tel type d'antivol qui est plus fréquemment utilisé pour empêcher les vois de véhicule, et notamment les vols de voitures particulières.

De nombreux perfectionnements ont été apportés aux antivols de ce type, qui concernent notamment le verrou, afin d'améliorer la résistance de l'antivol aux différents modes d'effraction imaginés par les voleurs de véhicules.

On constate toutefois qu'il subsiste une possibilité d'effraction au cours de laquelle le voleur tente d'agir sur le pêne proprement dit pour repousser celui-ci à l'intérieur du boîtier de l'antivol et libérer la colonne de direction.

La présente invention a pour objet de proposer une nouvelle conception d'un antivol de direction du type mentionné précédemment qui remédie à cet inconvénient en empêchant toute possibilité de repousser le pêne à l'intérieur du boîtier lorsque l'antivol est en position de repos, c'est-à-dire en position de blocage en rotation de la colonne de direction.

Dans ce but, l'invention propose un antivol de direction de véhicule automobile du type comportant un boîtier dans lequel un verrou est monté à rotation entre une position angulaire de repos dans laquelle une clef conforme peut être introduite, d'arrière en avant, ou retirée axialement, et au moins une position angulaire d'utilisation, dans laquelle la clef ne peut être extraite du verrou, le verrou comportant un organe de sortie rotatif formant came qui est susceptible de coopérer avec un doigt de commande porté par un pêne pour commander les déplacements de ce dernier qui est monté coulissant dans le boîtier, selon une direction axiale, entre une position avant d'antivol vers laquelle il est sollicité élastiquement et dans laquelle il fait saillie axialement vers l'avant à travers une ouverture du boîtier pour bloquer en rotation un organe de la colonne de direction lorsque le verrou est en position de repos, clef extraite, et une position arrière escamotée à l'intérieur du boîtier, caractérisé en ce que :
- le pêne comporte un doigt de blocage escamotable qui fait saillie radialement vers l'axe pour être reçu dans un logement de blocage formé dans une face latérale en vis-à-vis de l'organe de sortie, d'orientation axiale, lorsque le pêne est en position avant d'antivol, pour empêcher ou limiter tout déplacement du pêne vers sa position arrière escamotée ;
- le doigt de blocage s'efface automatiquement lors de la rotation du verrou, depuis sa position de repos vers sa position d'utilisation ;
- et le pêne est retenu axialement en position arrière escamotée, en présence d'une clef, par un organe de retenue de pêne qui est monté mobile entre une position effacée, en l'absence de clef, et une position de retenue en présence d'une clef.

Selon d'autres caractéristiques de l'invention :
- l'organe de retenue du pêne est un basculeur qui est monté pivotant, autour d'un axe transversal perpendiculaire à l'axe du verrou, qui comporte une surface de commande de ses mouvements qui coopère avec la clef, et qui comporte une extrémité conformée en crochet de retenue du pêne qui est susceptible de coopérer avec une patte complémentaire de retenue du pêne ;
- en position de retenue du pêne, l'extrémité en forme de crochet du basculeur s'étend axialement devant une patte d'orientation radiale du pêne, et, lors de la rotation du verrou depuis sa position de repos vers sa position d'utilisation, la patte de retenue du pêne s'échappe angulairement hors du crochet ;
- le basculeur est porté par le verrou avec son extrémité en forme de crochet qui, en présence d'une clef, fait saillie radialement vers l'extérieur pour être susceptible de coopérer avec la patte d'orientation radiale intérieure du pêne ;
- en position effacée, une partie du basculeur s'étend radialement à l'intérieur d'un couloir de clef formé dans le verrou, cette partie délimitant ladite surface de commande des mouvements du basculeur avec laquelle coopère la clef ;
- la patte de retenue du pêne est agencée à l'extrémité libre arrière d'une partie arrière du pêne qui s'étend à l'intérieur du boîtier ;
- le doigt de blocage est monté coulissant radialement dans le pêne à l'encontre d'un ressort de rappel qui le sollicite en permanence radialement vers l'intérieur en direction du logement de blocage ;
- le logement de blocage est délimité radialement vers l'intérieur par un fond plat d'orientation tangentielle, et axialement vers l'arrière par une surface transversale de butée avec laquelle le doigt de blocage est susceptible de coopérer pour empêcher ou limiter tout déplacement du pêne vers sa position arrière escamotée ;
- le logement de blocage est un évidement formé dans une face latérale cylindrique de l'organe de sortie et qui comporte une rampe latérale qui provoque l'effacement du doigt de blocage lors de ladite rotation du verrou de manière que le doigt de blocage sorte du logement pour s ' étendre alors radialement en regard d'une surface transversale plane de retenue du pêne formée sur l'organe de sortie ;
- le pêne comporte une partie arrière qui est reçue à l'intérieur du boîtier et dont l'extrémité avant porte le doigt de blocage.

D'autres caractéristiques et avantages de l'invention apparaîtront à la lecture de la description détaillée qui va suivre pour la compréhension de laquelle on se reportera aux dessins annexés dans lesquels :

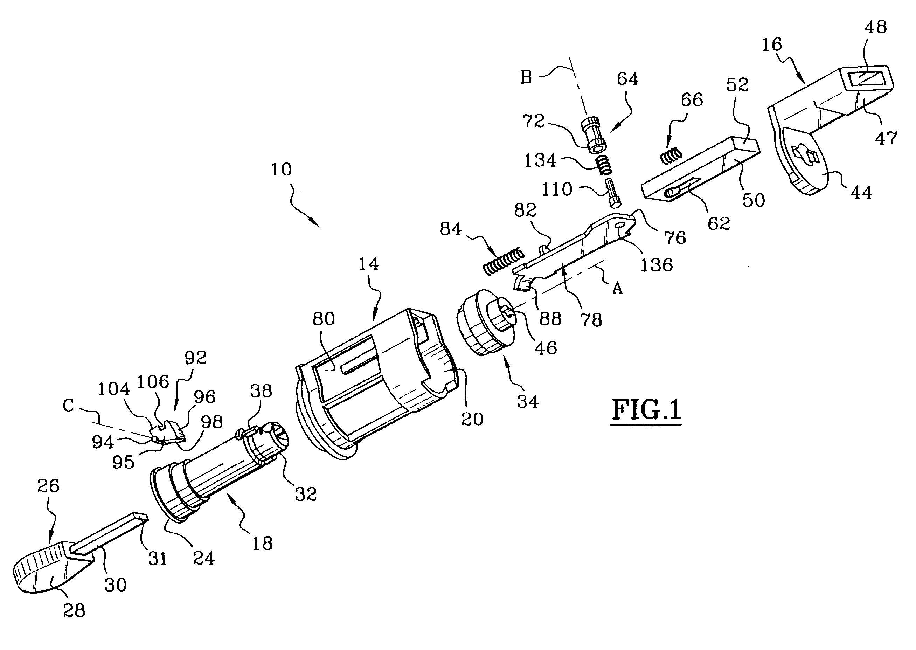

- la figure 1 est une vue en perspective éclatée qui illustre les principaux composants d'un antivol de direction de véhicule automobile réalisé conformément aux enseignements de l'invention, la vue représentant le boîtier de l'antivol par l'arrière ;
- la figure 2 est une vue de détail à plus grande échelle qui illustre, en perspective de trois-quarts arrière, les principaux composants mobiles de l'antivol de la figure 1 qui sont représentés en position assemblée et sur laquelle le verrou est illustré dan sa position angulaire d'utilisation avec le pêne en position arrière escamotée dans laquelle il est retenu par l'organe de sortie formant came du verrou ;
- la figure 3 est une vue à grande échelle et en perspective de trois-quarts arrière de l'organe de sortie formant came ;
- la figure 4 est une vue similaire à celle de la figure 3 sur laquelle l'organe de sortie est illustré en perspective de trois-quarts avant ;
- la figure 5 est une vue en coupe axiale par un plan vertical passant par l'axe horizontal de rotation du verrou et par l'axe vertical de coulissement du doigt de blocage, sur laquelle le verrou est représenté dans sa position angulaire de repos et en l'absence de clef dans l'antivol ;
- la figure 6 est une vue schématique de dessus de certains des composants de la figure 5 et sur laquelle l'organe de sortie formant came est illustré en développé et qui montre la position relative de l'organe de sortie formant came, de la tirette de commande des déplacements du pêne et de l'organe de retenue de ce dernier ;
- les figures 7 et 8 sont des vues similaires à celles des figures 5 et 6 sur lesquelles le verrou est illustré dans sa position angulaire de repos avec une clef introduite dans le couloir de clef du verrou ;
- les figures 9 et 10 sont des vues similaires à celles des figures 7 et 8 sur lesquelles le verrou est illustré dans sa position angulaire d'utilisation ;
- les figures 11 et 12 sont des vues similaires à celles des figures 9 et 10 sur lesquelles le verrou est illustré dans sa position de repos après retour de sa position d'utilisation ; et
- les figures 13 et 14 sont des vues similaires à celles des figures 5 et 6 dans lesquelles le verrou est illustré dans sa position angulaire de repos après extraction de la clef hors du verrou et sur lesquelles le pêne est en position avant d'antivol en appui sur un sommet de cannelures de l'arbre de colonne de direction.

Dans la description qui va suivre, afin de faciliter sa compréhension ainsi que celle des revendications, on utilisera à titre non limitatif les termes "horizontal", "vertical", "supérieur", "inférieur", "avant", "arrière", etc.

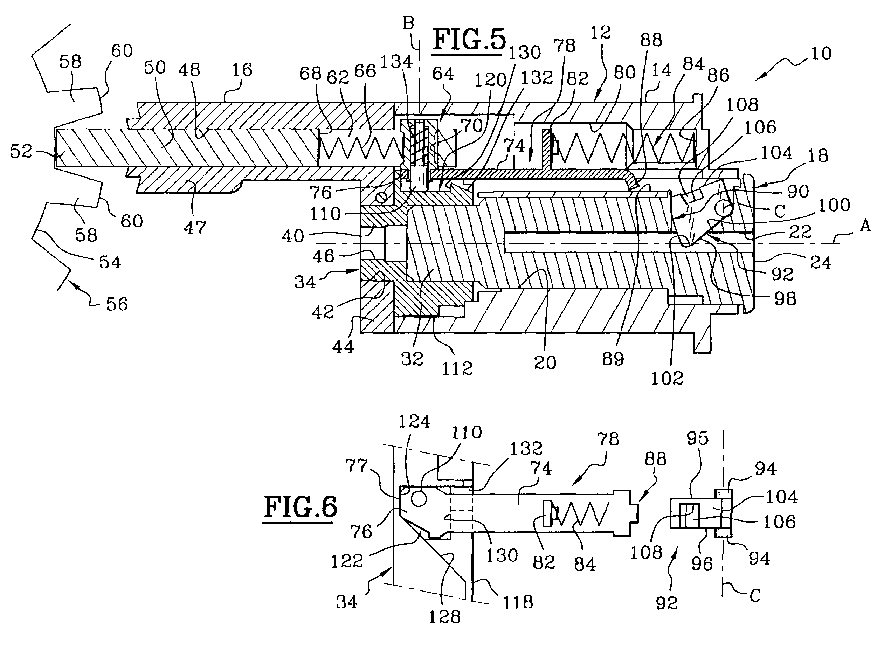

On a représenté sur les figures un antivol 10 de véhicule automobile qui comporte un boîtier 12 en deux parties moulées arrière 14 et avant 16. La portion inférieure, en considérant les figures, de la partie arrière 14 du boîtier d'antivol délimite un logement cylindrique 20 dans lequel est monté à rotation, autour de l'axe longitudinal A, un verrou rotatif 18 qui est ici illustré de manière schématique sous la forme d'un rotor qui est monté axialement d'arrière en avant, c'est-à-dire de la droite vers la gauche en considérant la figure 5, dans la partie arrière 14 du boîtier 12.

Le verrou rotatif 18, de conception générale connue, comporte un couloir axial 22 qui débouche dans sa face transversale arrière 24 pour l'introduction et l'extraction axiale d'une clef 26 de commande en rotation du verrou 18 qui comporte à cet effet une tête de clef 28 et un corps ou tige de clef 30 prévu pour être reçu dans le couloir 22, la tige 30 et le couloir 22 étant ici à titre d'exemple complémentaire et de section transversale rectangulaire.

Le tronçon d'extrémité libre avant 32 de diamètre réduit du verrou 18 entraîne en rotation dans les deux sens un organe de sortie 34 de forme générale cylindrique annulaire qui comporte un alésage interne 36 arrière de grand diamètre dans lequel est reçue l'extrémité avant 32 du verrou 18, l'entraînement en rotation entre les deux éléments étant assuré par un ergot 38 de la partie 32 reçu dans une encoche complémentaire 37 de l'alésage 36.

La partie cylindrique annulaire avant 40 de plus petit diamètre de l'organe de sortie 34 est guidé en rotation dans un trou 42 formé dans la partie en forme de plaque transversale 44 de la partie avant 16 du boîtier 12.

Le tronçon d'extrémité avant 40 de l'organe de sortie 34 est conformé intérieurement avec une forme 46 qui n'est pas de révolution, notamment pour entraîner en rotation un ensemble commutateur/interrupteur électrique associé à l'antivol 10 qui n'est pas représenté sur les figures.

La partie supérieure en forme de fourreau longitudinal 47 de la partie avant 16 du boîtier 12 qui s'étend longitudinalement vers l'avant, à partir de la plaque 44, délimite un canal interne 48 pour le guidage en coulissement longitudinal, parallèlement à l'axe A, du corps 50 d'un pêne de verrouillage qui est ici de section rectangulaire et dont l'extrémité libre avant 52 est prévue pour être reçue dans une rainure ou cannelure 54 d'orientation axiale d'un arbre de colonne de direction 56 dont l'axe de rotation est globalement perpendiculaire à la direction de coulissement du pêne 50 et à l'axe A du verrou.

Les rainures 54 sont délimitées par des cannelures adjacentes en relief 58 délimitées radialement par des sommets de cannelure 60.

Dans sa partie longitudinale arrière, le pêne 50 comporte une lumière longitudinale 62 qui reçoit en coulissement un doigt cylindrique 64 de commande de ses déplacements dans les deux sens.

Le doigt 64 est ici une pièce cylindrique creuse dont l'axe vertical B est perpendiculaire et concourant à l'axe A de rotation du verrou 18.

Un ressort de compression 66, dont la fonction sera expliquée ultérieurement, est monté dans la lumière 62 en prenant appui contre le fond avant 68 de celle-ci et contre le doigt de commande 64 pour solliciter en permanence élastiquement ce dernier en appui contre le fond arrière 70 de la lumière 62.

La partie inférieure 72 du doigt de commande 64 est fixée sur la face supérieure 74 de la partie avant 76 d'une tirette de commande 78 associée au pêne 50.

La tirette 78 se présente sous la forme d'une plaque horizontale d'orientation axiale qui s'étend dans un logement 80 formé dans la partie supérieure de la partie arrière 14 du boîtier 12 au-dessus du verrou 18, ce logement 80 communiquant avec l'alésage 20 pour le guidage à rotation du rotor 18.

Sensiblement à mi-longueur, la tirette 78 comporte une patte transversale supérieure 82 d'appui pour un ressort hélicoïdal de compression 84 dont l'extrémité arrière prend appui contre une surface correspondante 86 de la partie arrière 14 du boîtier 12 de manière à solliciter élastiquement la tirette 78, et donc le pêne 50 par l'intermédiaire du ressort 66, axialement d'arrière en avant, c'est-à-dire de la droite vers la gauche en considérant la figure 5.

L'extrémité axiale arrière 88 de la tirette 78 est de largeur transversale réduite et est repliée radialement vers l'intérieur en direction de l'axe A de manière à constituer une patte de retenue de la tirette 78 et du pêne 50.

La patte 88 s'étend en regard de la surface cylindrique externe 89 du corps de verrou 18 dans laquelle est formé, au voisinage de la face transversale arrière 24, un logement 90 de forme globalement parallélépipédique rectangle qui débouche radialement vers l'extérieur et radialement vers l'intérieur dans le couloir de clef 22.

Le logement 90 reçoit, conformément aux enseignements de l'invention, un organe 92 en forme de basculeur pour la retenue, dans certaines configurations, de la tirette 78 en position arrière reculée.

A cet effet, le basculeur 92 est monté pivotant autour d'un axe transversal C perpendiculaire à l'axe A, le corps du basculeur 92 comportant à cet effet deux tenons d'articulation 94 qui s'étendent transversalement depuis ses faces latérales d'orientation axiale 95 et 96, et qui sont reçus en articulation dans des parties complémentaires du logement 90.

Pour définir la position effacée du basculeur 92, illustrée notamment à la figure 5, la face inférieure inclinée 98 du basculeur est en appui contre un fond incliné 100 du logement 90 avec la partie 102 d'extrémité inférieure avant du corps de basculeur 92 qui s'étend à l'intérieur du couloir de clef 22 (voir figure 5).

Pour coopérer avec la patte de retenue 88 de la tirette 78, la face supérieure 104 du basculeur 92 est conformée en crochet et comporte à cet effet une encoche 106 qui débouche globalement radialement vers l'extérieur, qui est ouverte dans la face latérale 96 du basculeur 92 visible dans le plan de la figure 5 et qui est obturée transversalement dans l'autre direction par une cloison 108.

Dans sa position effacée illustrée notamment à la figure 5, la partie avant de la face supérieure 104 du basculeur 92 est effacée à l'intérieur du logement 90, c'est-à-dire que la patte arrière 88 de la tirette 78 peut se déplacer axialement d'avant en arrière pour venir axialement au droit du plan transversal dans lequel est formée l'encoche 106, afin de pouvoir être reçue dans cette dernière suite à un basculement de l'organe de retenue 92 autour de son axe C, dans le sens horaire en considérant la figure 5, comme cela sera expliqué par la suite.

Dans sa position illustrée à la figure 5, on voit que la face inférieure 98 du basculeur 92 en appui sur le fond 100 du logement 90 est incliné d'environ 450 de manière à constituer une rampe formant came de commande du pivotement du basculeur 92 lorsque la tige 30 de la clef 26 est introduite axialement dans le couloir 22, sous l'action de sa face transversale d'extrémité libre avant 31 qui coopère avec la face inférieure 98.

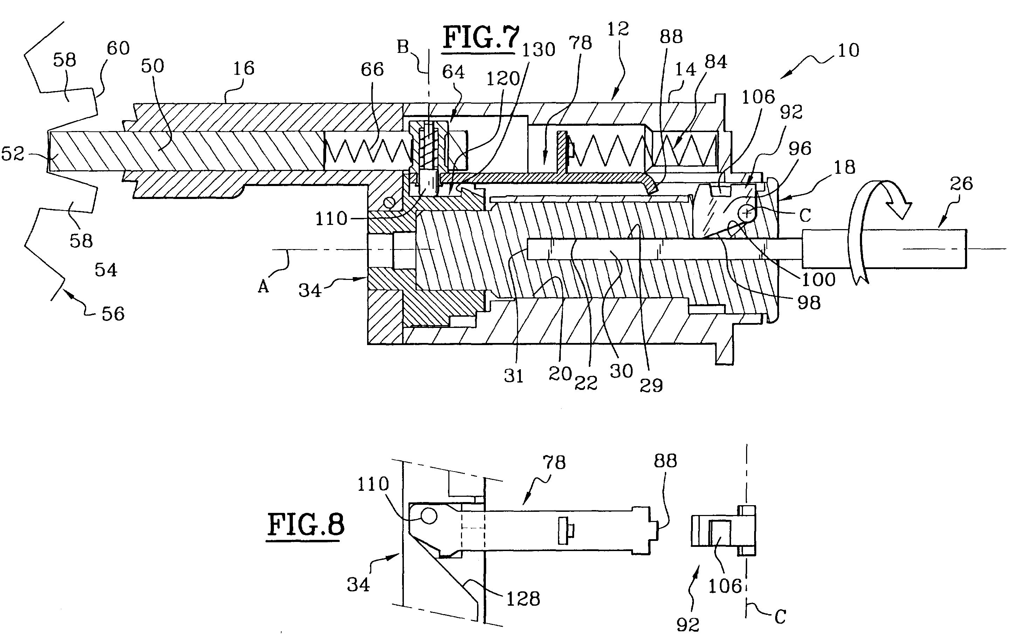

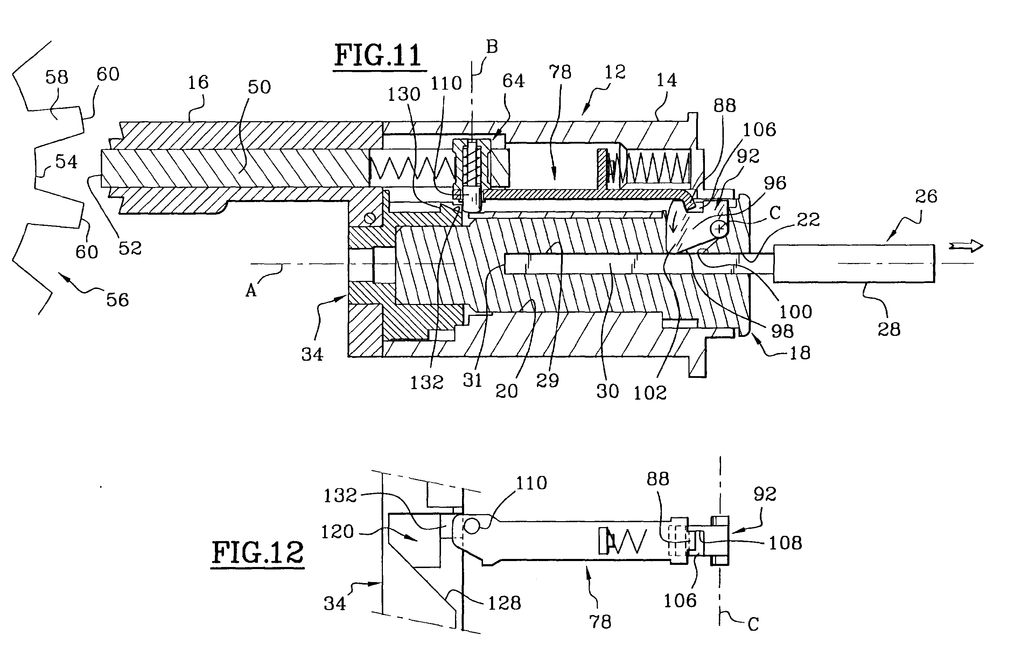

En présence de la clef 26, 30 dans le couloir 22, le basculeur 92 est maintenu dans sa position sortie de retenue illustrée aux figures 7 et 11, dans laquelle il est susceptible de coopérer avec la patte de retenue 88 de la tirette 78, car l'extrémité libre avant de sa face inférieure 98 est en appui contre une face latérale 29 de la tige 30 de la clef 26.

On décrira maintenant en détail l'organe de sortie 34 formant came et le doigt de blocage associé 110.

La partie principale arrière de plus grand diamètre de l'organe de sortie 34 est délimité par une surface cylindrique formant jupe périphérique 112 qui est délimitée axialement vers l'arrière par un épaulement radial annulaire 114 et qui se prolonge axialement vers l'arrière par la surface cylindrique externe 116 de la partie arrière de plus petit diamètre 40 qui est délimitée par une face transversale d'extrémité arrière 118 annulaire transversale.

Dans la paroi cylindrique 112 est formé un logement de blocage 120 qui est délimité radialement vers l'intérieur par un fond plat 122 d'orientation tangentielle, axialement vers l'avant par une face transversale 124, latéralement d'une part par une facette verticale d'orientation axiale 126 et, d'autre part, par une facette verticale à deux pans formant came ou rampe 128 qui s'étend depuis la face transversale avant 124 jusqu'à la face transversale annulaire arrière 114.

Le logement de blocage 120 est aussi délimité axialement vers l'arrière par une surface transversale verticale de butée 130.

Pour permettre au doigt de blocage 110 de pénétrer axialement d'arrière en avant dans le logement de blocage 120, il est prévu une rampe d'entrée 132 qui est inclinée d'arrière en avant et de bas en haut en s'étendant axialement depuis la face transversale annulaire arrière 118 jusqu'à la surface transversale de butée 130.

Le doigt de blocage 110 est monté coulissant radialement, selon l'axe B, à l'intérieur du doigt de commande cylindrique creux 64 et il est sollicité élastiquement en permanence par un ressort de blocage 134 qui le pousse radialement vers l'intérieur en direction de l'axe A en traversant un trou 136 prévu à cet effet dans la partie arrière 76 de la tirette 78.

Le doigt de blocage 110 est ainsi intégré au doigt de commande 64 par rapport auquel il ne peut coulisser que radialement selon l'axe B, la position axiale du doigt de blocage 110 déterminant la position axiale de la tirette 78 et la position axiale du doigt de commande 64 qui agit sur le pêne 50 par l'intermédiaire du ressort 66.

On décrira maintenant le fonctionnement de l'antivol 10 en partant de la position illustrée aux figures 5 et 6.

Dans cette position de repos, le pêne 50 est dans sa position avant d'antivol dans laquelle son extrémité libre 52 est reçue dans une rainure 54 et il est sollicité en permanence par le ressort 66 vers cette position.

Dans cette position de repos illustrée aux figures 5 et 6, le ressort de rappel sollicite axialement la tirette 78 d'arrière en avant avec son bord transversal d'extrémité avant 77 en appui contre le fond transversal arrière 124 du logement de blocage 120.

En cas de tentative d'effraction visant à repousser axialement le pêne d'avant en arrière, c'est-à-dire de la gauche vers la droite en considérant les figures 5 et 6, le pêne 50 entraîne, par l'intermédiaire du ressort 66 comprimé à spires jointives, le doigt de commande 64 et donc le doigt de blocage 110 qui est reçu dans le logement de blocage 120 en appui contre le fond 122 de ce dernier.

La tentative de déplacer le pêne 50 aboutit donc à amener le doigt de blocage 110 en butée contre la surface transversale de butée 130 du logement de blocage 120, ce qui empêche un retrait suffisant du pêne 50 dans le boîtier d'antivol 12, c'est-à-dire ce qui empêche de libérer en rotation l'arbre 56 de la colonne de direction.

Lorsque l'utilisateur introduit une clef conforme 26 dans le couloir de clef 22, et comme on peut le voir aux figures 7 et 8, il provoque un pivotement dans le sens horaire du basculeur de retenue 92 autour de son axe C.

Etant donné que la tirette 78, comme on peut le voir aux figures 7 et 8, est dans une position avancée correspondant à la position avant d'antivol du pêne 50, la patte arrière de retenue 88 de la tirette 78 n'est pas en regard du basculeur 92 et le pivotement de ce dernier se fait sans que la patte 88 soit reçue dans l'encoche 106 formant crochet du basculeur de retenue 92.

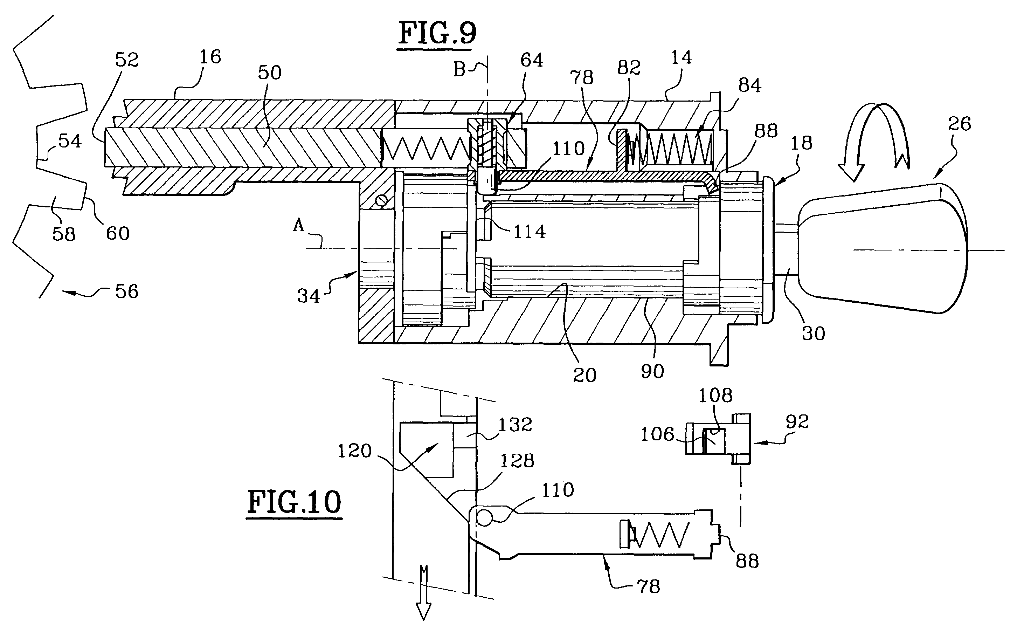

L'utilisation de l'antivol en vue de permettre le démarrage et l'utilisation du véhicule consiste ensuite à faire tourner la clef dans le sens indiqué par la flèche de la figure 7 pour aboutir à la position d'utilisation illustrée aux figures 9 et 10 dans laquelle le verrou 18 a effectué une course angulaire depuis sa position de repos.

La rotation de la clef 26 et du rotor 18 provoque une rotation correspondante dans le même sens de l'organe de sortie 34.

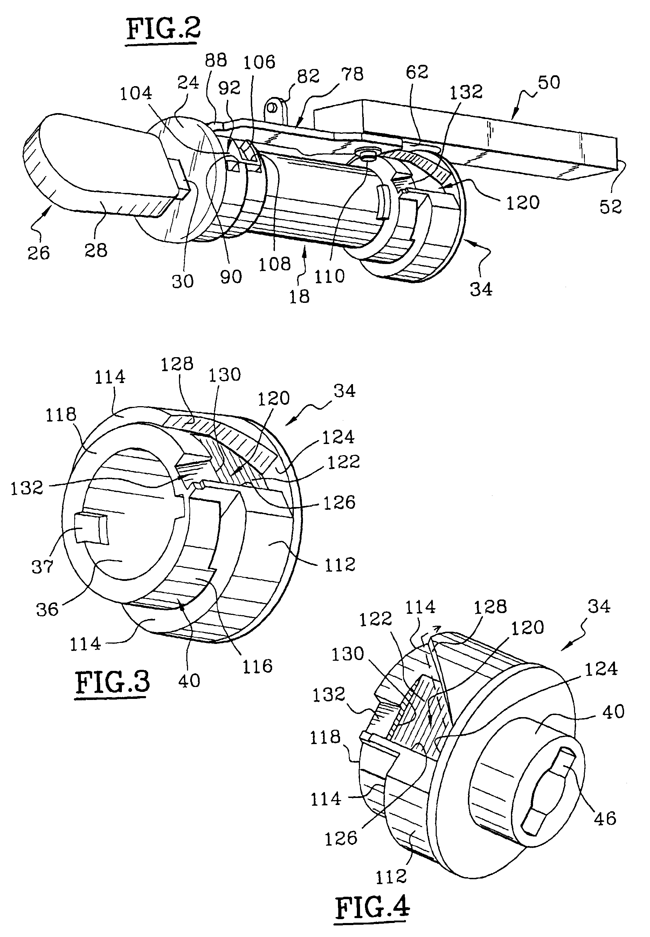

Lors de cette rotation, le doigt de blocage 110 coopère par sa face latérale cylindrique avec la rampe 128 pour provoquer sa sortie hors du logement de blocage 120, selon le trajet indiqué à la figure 4, de manière à venir s'étendre, comme on peut le voir à la figure 9, en regard de la surface transversale de butée 114.

Cette sortie du doigt de blocage 110 provoque aussi un déplacement axial d'avant en arrière du doigt de commande 64 et donc du pêne 50 qui sort hors des rainures 54 en libérant ainsi l'arbre 56 de la colonne de direction.

Comme on peut le voir à la figure 10, la tirette 78 s'est aussi déplacée angulairement par rapport au basculeur de retenue 92 portée par le rotor de verrou 18, le basculeur 92 restant dans sa position active dans laquelle il fait saillie radialement vers l'extérieur tandis que la patte arrière 88 de retenue de la tirette 78 s'est déplacée axialement vers l'arrière, c'est-à-dire qu'elle se situe désormais au droit de l'encoche 106 du basculeur de retenue 92 dans laquelle elle va pouvoir pénétrer ensuite selon la direction tangentielle.

En effet, à partir de la position d'utilisation illustrée aux figures 9 et 10 et après démarrage du moteur du véhicule, l'utilisateur relâche son effort sur la clef 26 et des moyens de rappel élastique (non représentés) du verrou 18 tendent à le ramener vers sa position de repos illustrée aux figures 11 et 12.

Lors du retour vers la position de repos du verrou 18, la patte de retenue 88 pénètre dans l'encoche 106 jusqu'à venir en appui tangentiellement contre le fond 108, le basculeur de retenue 92 restant dans sa position haute dans laquelle il fait saillie radialement pour retenir ainsi axialement la tirette 78, et donc le pêne 50 par l'intermédiaire du doigt de commande 64 en position arrière de repos, l'arbre 56 de la colonne de direction demeurant libre en rotation.

Comme on peut le voir à la figure 11, le doigt de blocage 110 s'étend en regard de la rampe 130 mais il ne participe pas directement à la retenue du pêne 50, celle-ci étant assurée par le basculeur 92 de la tirette 78.

En partant de la position illustrée à la figure 11, lorsque l'utilisateur retire axialement la clef d'avant en arrière, la tige 30 sort du couloir de clef 22 et le basculeur de retenue 92 retombe dans le couloir de clef 22, c'est-à-dire qu'il pivote dans le sens anti-horaire autour de son axe de basculement C.

Le pivotement aboutit à libérer la patte de retenue 88 qui n'est plus retenue par le crochet 106 et la tirette 78 est alors immédiatement sollicitée élastiquement vers l'avant, c'est-à-dire de la droite vers la gauche par le ressort 84 pour venir occuper de nouveau sa position illustrée à la figure 5. Lors de ce retour du pêne 50 avec la tirette 78 vers sa position avant de verrouillage de l'arbre 56 de la colonne de direction, le doigt de blocage 110 monte sur la rampe 130 pour pénétrer à nouveau dans le logement de blocage 120 en venant en appui radial contre le fond 122 de ce dernier sous l'action du ressort de blocage 134.

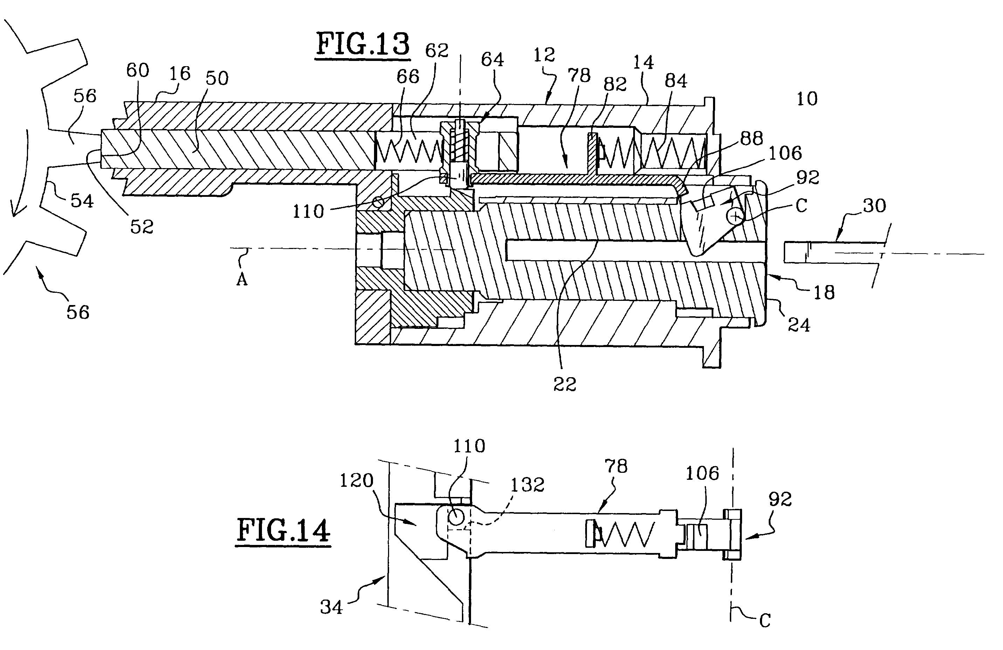

Si, comme on peut le voir à la figure 13, le pêne 50 n'est pas en regard d'une rainure 54 mais se trouve au contraire en regard du sommet 60 d'une cannelure 56, sa course axiale vers l'avant est limitée et il demeure dans la position intermédiaire illustrée aux figures 13 et 14 grâce à la présence du ressort 66.

La tirette 78 avec le doigt de commande 64 et le doigt de blocage 110 sont dans une position axiale intermédiaire car le doigt de blocage 64 est en appui contre le ressort à spires jointives 66 monté dans la lumière 62 du pêne 50.

Pour finir de bloquer l'arbre 56 de la colonne de direction, le conducteur fait tourner ce dernier jusqu'à ce que le pêne 50 soit en regard d'une rainure 54.

Dés que cette position angulaire de l'arbre de colonne de direction 56 est atteinte, le pêne 50 avec la tirette 78 se déplace globalement axialement vers l'avant pour occuper à nouveau la position illustrée aux figures 5 et 6.

## Revendications

1. Antivol (10) de direction de véhicule automobile du type comportant un boîtier (12, 14, 16) dans lequel un verrou (18) est monté à rotation entre une position angulaire de repos dans laquelle une clef conforme (26, 30) peut être introduite, d'arrière en avant, ou retirée axialement, et au moins une position angulaire d'utilisation, dans laquelle la clef (26, 30) ne peut être extraite du verrou (18), le verrou comportant un organe de sortie rotatif (34) formant came qui est susceptible de coopérer avec un doigt de commande (110, 64) porté par un pêne (50, 78) pour commander les déplacements de ce dernier qui est monté coulissant dans le boîtier (12), selon une direction axiale, entre une position avant d'antivol vers laquelle il est sollicité élastiquement et dans laquelle il fait saillie axialement vers l'avant à travers une ouverture du boîtier pour bloquer en rotation un organe (56) de la colonne de direction lorsque le verrou (18) est en position de repos, clef extraite, et une position arrière escamotée à l'intérieur du boîtier, caractérisé en ce que :
- le pêne (50, 78) comporte un doigt de blocage (110) escamotable qui fait saillie radialement vers l'axe (A) pour être reçu dans un logement de blocage (120) formé dans une face latérale en vis-à-vis (112) de l'organe de sortie (34), d'orientation axiale, lorsque le pêne (50, 78) est en position avant d'antivol, pour empêcher ou limiter tout déplacement du pêne vers sa position arrière escamotée ;
- le doigt de blocage (110) s'efface automatiquement lors de la rotation du verrou (18), depuis sa position de repos vers sa position d'utilisation ;
- et le pêne (50, 78) est retenu axialement en position arrière escamotée, en présence d'une clef, par un organe de retenue de pêne (92) qui est monté mobile entre une position effacée, en l'absence de clef, et une position de retenue en présence d'une clef.

2. Antivol selon la revendication 1, caractérisé en ce que l'organe de retenue du pêne est un basculeur (92) qui est monté pivotant, autour d'un axe transversal (C) perpendiculaire à l'axe (A) du verrou (18), qui comporte une surface de commande (98) de ses mouvements qui coopère avec la clef (26, 30, 31, 29), et qui comporte une extrémité conformée en crochet (106) de retenue du pêne qui est susceptible de coopérer avec une patte complémentaire (88) de retenue du pêne (50, 78).

3. Antivol selon la revendication 2, caractérisé en ce que, en position de retenue du pêne, l'extrémité en forme de crochet (106) du basculeur (92) s'étend axialement devant une patte (88) d'orientation radiale du pêne (50, 78), et en ce que, lors de la rotation du verrou (18) depuis sa position de repos vers sa position d'utilisation, la patte de retenue (88) du pêne s'échappe angulairement hors du crochet (106).

4. Antivol selon la revendication 3, caractérisé en ce que le basculeur (92) est porté par le verrou (18) avec son extrémité en forme de crochet (106) qui, en présence d'une clef (26, 30), fait saillie radialement vers l'extérieur pour être susceptible de coopérer avec la patte (88) d'orientation radiale intérieure du pêne (50, 78).

5. Antivol selon la revendication 4, caractérisé en ce que, en position effacée, une partie (102) du basculeur (92) s'étend radialement à l'intérieur d'un couloir de clef (22) formé dans le verrou (18), cette partie délimitant ladite surface (98) de commande des mouvements du basculeur avec laquelle coopère la clef (26, 30, 31, 29).

6. Antivol selon l'une quelconque des revendications 2 à 5, caractérisé en ce que la patte (88) de retenue du pêne est agencée à l'extrémité libre arrière d'une partie arrière (78) du pêne (50, 78) qui s'étend à l'intérieur du boîtier (18).

7. Antivol selon l'une quelconque des revendications précédentes, caractérisé en ce que le doigt de blocage (110) est monté coulissant radialement dans le pêne (50, 64, 78) à l'encontre d'un ressort de rappel (134) qui le sollicite en permanence radialement vers l'intérieur en direction du logement de blocage (120).

8. Antivol selon l'une quelconque des revendications précédentes, caractérisé en ce que le logement de blocage (120) est délimité radialement vers l'intérieur par un fond plat (122) d'orientation tangentielle, et axialement vers l'arrière par une surface transversale de butée (130) avec laquelle le doigt de blocage (110) est susceptible de coopérer pour empêcher ou limiter tout déplacement du pêne (50, 78) vers sa position arrière escamotée.

9. Antivol selon l'une quelconque des revendications précédentes, caractérisé en ce que le logement de blocage (120) est un évidement formé dans une face latérale cylindrique (112) de l'organe de sortie (134) et qui comporte une rampe latérale (128) qui provoque l'effacement du doigt de blocage (110) lors de ladite rotation du verrou (18) de manière que le doigt de blocage (110) sorte du logement (120) pour s'étendre alors radialement en regard d'une surface transversale (114) de retenue du pêne (50, 78) formée sur l'organe de sortie (34).

10. Antivol selon l'une quelconque des revendications des revendications précédentes, caractérisé en ce que le pêne (50, 78) comporte une partie arrière (78) qui est reçue à l'intérieur du boîtier (18, 80) et dont l'extrémité avant (76) porte le doigt de blocage (64, 100).
